# EUROPÄISCHE PATENTSCHRIFT

(11) **EP 1 753 579 B1**
(45) Veröffentlichungstag und Bekanntmachung des Hinweises auf die Patenterteilung: **05.03.2008**
(21) Anmeldenummer: 05726515.9
(22) Anmeldetag: 08.04.2005
(51) Int. Cl.: B23D 49/16

(54) **UNIVERSALSÄGE**
UNIVERSAL SAW
SCIE UNIVERSELLE

(30) Priorität: 15.05.2004 DE 102004024280
(43) Veröffentlichungstag der Anmeldung: 21.02.2007
(73) Patentinhaber: ROBERT BOSCH GMBH, 70442 Stuttgart (DE)
(72) Erfinder: SAEGESSER, Daniel, CH-4900 Langenthal (CH); FELDER, Sacha, CH-4513 Langendorf (CH)
(86) Internationale Anmeldenummer: PCT/EP2005/051562
(87) Internationale Veröffentlichungsnummer: WO 2005/110652

(56) Entgegenhaltungen:
- US-A- 2 998 830
- US-A- 3 750 283
- US-A1- 2003 110 646

## Beschreibung

### Stand der Technik

Die Erfindung geht aus von einer Universalsäge nach der Gattung des Anspruchs 1.

Es ist eine Multisäge Westfalia 59 7187 bekannt, die sich als Elektro-Fuchsschwanz, Stichsäge oder Säbelsäge einsetzen lässt Bei dieser Multisäge ist der Teil ihres Gehäuses, an dem das dem Einsatzzweck angepasste Sägeblatt durch einen breiten Gehäuseschlitz aus dem Innenraum heraustritt, selbst als Einrichtung zur Abstützung der Säge auf dem zu bearbeitenden Werkstück ausgebildet. Eine optimale Anpassung der Einrichtung zur Abstützung an dem Einsatzzweck ist hier natürlich nicht gegeben. Außerdem unterliegt das Gehäuse der Multisäge, das aus Kunststoff besteht, natürlich im harten Betrieb einem erhöhten Verschleiß insbesondere an der Auflagestelle auf dem Werkstück, wodurch sich die Abstützung weiter verschlechtert.

Daneben ist es Stand der Technik, bei für nur einen Einsatzzweck ausgebildeten Elektrosägen, also bei einer Stichsäge oder einer Säbelsäge, die Einrichtung zur Abstützung der jeweiligen Säge als gesondertes Bauteil, - nämlich als Fußplatte - auszugestalten. So lässt sich die Fußplatte und deren räumliche Anordnung am Gehäuse der Säge optimal wählen: Bei einer Stichsäge ist es für beste Sägeergebnisse notwendig, die Fußplatte genau im rechten Winkel zum Sägeblatt, bzw. zu dessen Werkzeugbewegungsrichtung anzuordnen. Bei einer Säbelsäge oder einem Elektrofuchsschwanz dagegen werden beste Sägeergebnisse erzielt, wenn die Fußplatte schwenkbar am Gehäuse der Säge angeordnet ist und sich so z. B. der Form des zu bearbeitenden Werkstücks flexibel anpassen kann.

Eine Universalsäge, die sowohl als Stichsäge mit fest angeordneter Fußplatte als auch als Säbelsäge mit schwenkbar gelagerter Fußplatte einsetzbar ist, wird in der US 2,998,830 beschrieben. Die Fußplatte der Säge ist über eine einzelne Schwenkachse eines Pins drehbar am Gehäuse der Säge gelagert. Zur Arretierung der Fußplatte ist ein Arretierglied vorgesehen, das in einer Führungsnut im Gehäuse axial verschieblich gelagert ist. Das Arretierglied ist über eine Schraube, die in einen axialen Schlitz im Arretierglied eingreift, am Gehäuse gehalten. Innerhalb der Längserstreckung des Schlitzes kann das Arretierglied entlang der Führungsnut axial verschoben werden.

In der zurückgezogenen Position liegt die Stirnseite des Arretierglieds auf Abstand zu einer Aufnahme, die an einem Gelenkteil gebildet ist, über das die Fußplatte schwenkbar am Gehäuse gelagert ist. In der ausgefahrenen Position ragt dagegen die Stirnseite des Arretierglieds in die zugeordnete Aufnahme am Gelenkteil ein, so dass das Gelenkteil blockiert ist und keine Drehung um die Schwenkachse ausführen kann. Auf diese Weise ist die Fußplatte zwischen der frei schwenkbaren Position und der arretierten Position zu verstellen.

Aus Symmetriegründen muss die Schwenkachse das Sägeblatt schneiden, das heißt dass die Gelenke, welche die Schwenkachse definieren, unmittelbar neben dem Sägeblatt positioniert sein müssen. Diese stellt eine konstruktive Einschränkung dar.

Aus der US 3,750,283 ist eine Säbelsäge bekannt, deren Fußplatte von zwei Gelenkstangen getragen ist, die axial verstellbar im Gehäuse der Säge gelagert sind. Die erste Gelenkstange wird über eine Schraube befestigt, die zweite Gelenkstange weist dagegen ein Außengewinde auf, auf das eine gehäuseseitige Mutter aufgeschraubt ist. Durch Drehen der Mutter kann die Gewindestange ein- und ausgefahren werden.

Mit dieser Säge ist nur eine Bearbeitung des Werkstücks unter einem fest vorgegeben Winkel möglich und die Bearbeitung auf ebene Flächen des Werkstücks beschränkt ist.

### Vorteile der Erfindung

Ausgehend von den beim Stand der Technik beschriebenen Nachteilen wird mit den Merkmalen des Anspruchs 1 eine als Stich- oder Säbelsäge einsetzbare Universalsäge geschaffen, die eine verschleißfeste Fußplatte hat, deren Lage und räumliche Anordnung relativ zum Sägeblatt und zum zu bearbeitenden Werkstück sich durch einfaches Verstellen leicht dem Einsatzzweck als Stichsäge oder Säbelsäge optimal anpassen lässt.

Eine besonders zweckmässige Ausgestaltung der Universalsäge ergibt sich, wenn die Fussplatte um zwei parallele Schwenkachsen am Gehäuse angelenkt ist, die vorzugsweise gleichen Abstand von der Ebene der Fussplatte haben und bei der der parallel zur Arbeitsbewegung des Sägeblatts gemessene Abstand einer der Schwenkachsen vom Gehäuse konstant ist, während der Abstand der anderen Schwenkachse variabel einstellbar und in einer definierten ersten Arbeitsstellung, in der beide Abstände gleich sind, verrastbar ist.

Obwohl sich die Merkmale der Erfindung mit verschiedenen aus dem Stand der Technik bekannten, als Stich- oder Säbelsäge einsetzbaren Universalsägen einsetzen lässt und dabei den hier beschriebenen technischen Fortschritt erzielen, lässt sich die Erfindung besonders vorteilhaft an einer Universalsäge verwirklichen, bei der das Gehäuse mehrteilig aus einem den Antriebsmotor aufnehmenden Teilgehäuse, welches gleichzeitig als Griffteil der Universalsäge dient, und einem Gehäusehauptteil besteht, in dem das Sägeblatt geführt ist, wobei die Gehäuseteile um eine zur Achse des Antriebsmotors rechtwinklige Knickachse in verschiedenen Winkelstellungen zueinander verrastbar sind, wobei sich im Antriebsstrang ein Winkelgetriebe befindet.

Weitere vorteilhafte Ausgestaltungen der Erfindung ergeben sich aus den Merkmalen der Ansprüche und sind in der Beschreibung erläutert und an Hand der Zeichnung näher erkennbar.

### Zeichnung

Ausführungsbeispiele der Erfindung sind in der nachfolgenden Beschreibung an Hand der zugehörigen Zeichnung erläutert.

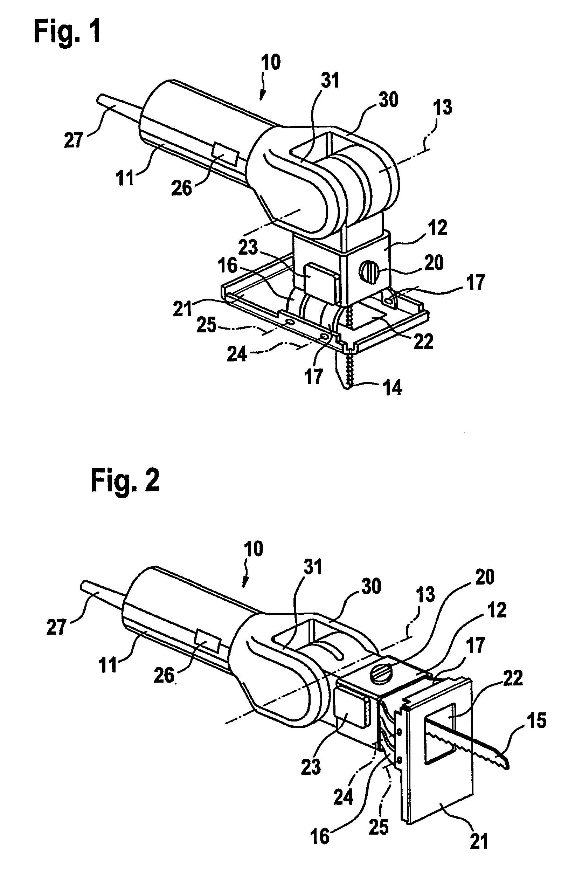

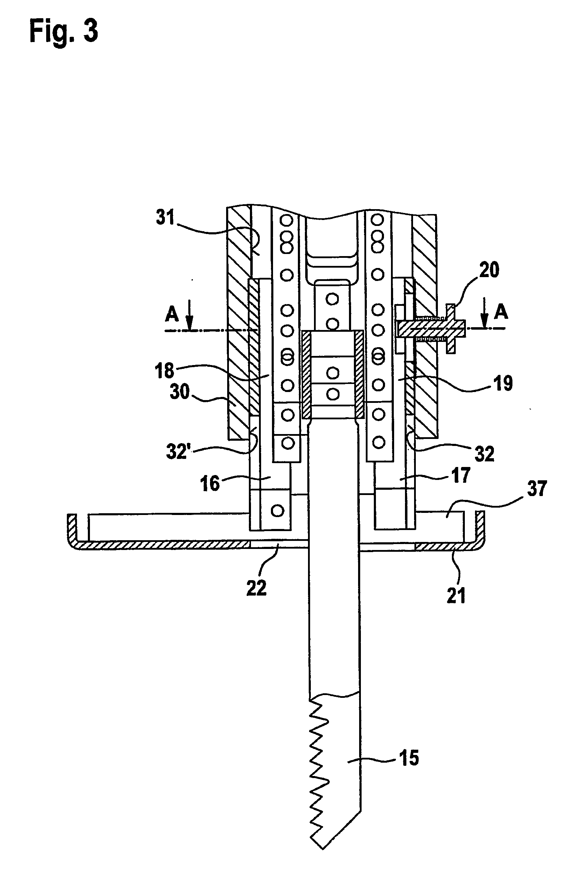

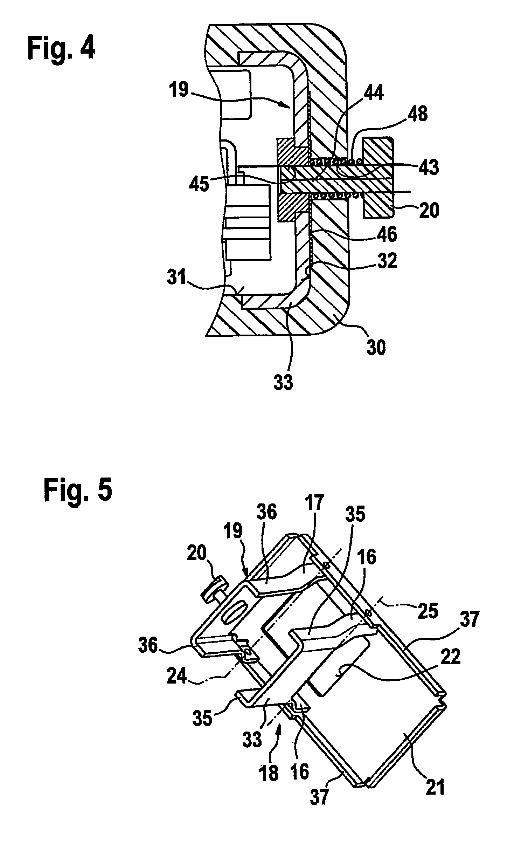

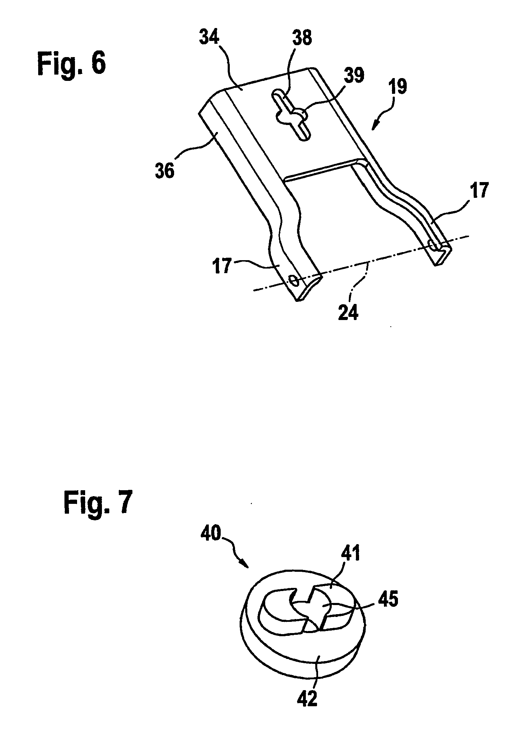

In Figur 1 ist eine erfindungsgemäss ausgestaltete Universalsäge in Ansicht dargestellt mit einem aus zwei Teilen bestehenden Gehäuse, bei der sich die beiden Teile des Gehäuses als Stab- und Stichsäge in einer 90°-Stellung zueinander befinden, Figur 2 zeigt die gleiche Universalsäge in gestreckter 180°-Stellung der Teile des Gehäuses als Säbelsäge, Figur 3 eine teilweise Schnittdarstellung durch den Gehäusegrundkörper der Universalsäge entlang der Mittelebene des Sägeblatts, Figur 4 eine Schnittdarstellung entlang A - A der Figur 3, Figur 5 als Einzelheit in perspektivischer Ansicht die Fussplatte der Universalsäge mit Haltebügel und Verstellbügel, Figur 6 als vergrösserte Einzelheit den Verstellbügel und Figur 7 das Führungsteil des Haltemechanismus für den Verstellbügel der Fussplatte im Gehäuse der Universalsäge.

### Beschreibung der Ausführungsbeispiele

Eine in Figur 1 und Figur 2 dargestellte Universalsäge 10 hat ein aus im wesentlichen zwei Gehäuseteilen - einem Teilgehäuse 11 und einem Gehäusegrundkörper 12 - bestehendes Gehäuse. Das Teilgehäuse 11 ist um eine Knickachse 13 in seiner Winkelstellung gegenüber dem Gehäusegrundkörper 12 verstellbar. So zeigt Figur 1 die Universalsäge 10 in einer Stellung als Stab-Stichsäge, in der sich der Gehäusegrundkörper 12, in dem ein Werkzeug, hier ein handelsübliches Sägeblatt 14 für Stichsägen, geführt ist, und das Teilgehäuse 11 in einer 90°-Stellung zueinander befinden. In Figur 2 ist die gleiche Universalsäge in gestreckter 180°-Stellung abgebildet, in der sie sich als Säbelsäge einsetzen lässt. Im Gehäusegrundkörper 12 ist bei diesem Einsatzfall ein handelsübliches Säbelsägeblatt 15 eingesetzt. Bei diesem zweiten Einsatzfall ist das Sägeblatt gegenüber dem oben beschriebenen Einsatzfall um 180° gedreht eingesetzt.

Dabei wird die Verwendung der dem jeweiligen Sägefall - als Stichsäge für besonders feine Arbeiten oder als Säbelsäge für gröbere Arbeiten - angepasster Sägeblätter 14 oder 15 durch ein Spannsystem für die Sägeblätter, das in der Zeichnung in Figur 3 angedeutet sich innerhalb des Gehäusegrundkörpers 12 befindet, ermöglicht. Dieses ist in der Lage, sowohl die speziellen Einsteckenden von Stichsäge- 14 als auch von Säbelsägeblättem 15 in zwei jeweils um 180° gedrehten Lagen zu spannen. Zur Bedienung des Spannsystems ist am freien Ende des Gehäusegrundkörpers 12 ein Bedienungshebel 23 angeordnet.

An der dem zu bearbeitenden Werkstück zugewandten Unterseite des Gehäusegrundkörpers 12, aus dem das Sägeblatt 14, 15 hervortritt, ist eine Fussplatte 21 angeordnet (vergleiche auch Figur 5 ff.), die sich im wesentlichen normal zur Arbeitsbewegungsrichtung des Sägeblatts 14, 15 erstreckt und zur Auflage auf dem Werkstück - hier nicht dargestellt - dient. Die Fussplatte 21 hat eine Öffnung 22, durch die sich das Sägeblatt 14, 15 erstreckt. Um die Fussplatte in die optimale Stellung zum Werkstück zu bringen, zum Beispiel beim Einsatz als Säbelsäge, kann sie aus ihrer Normalstellung in verschiedene Winkelpositionen gebracht werden und ist dort - wie weiter unten beschrieben wird -gegebenenfalls feststellbar.

Wie Figur 1 und 2 erkennen lassen, wird die Fussplatte 21 von Haltesäulen 16, 17 in Schwenkachsen 24, 25 am Gehäuse der Universalsäge, hier genauer am Gehäusegrundkörper 12, verdrehbar gehalten. Jeweils zwei Haltesäulen 16, 17 sind als gabelartige Fortsätze eines U-förmig ausgebildeten Bauteils ausgebildet (Figur 5 und 6). Jedes dieser Bauteile ist in einem formangepassten, etwa wannenförmigen Lagerbett (Figur 4) im Innenraum des Gehäusegrundkörpers 12 der Universalsäge geführt. Das Bauteil mit den Haltesäulen 17 ist als Haltebügel 18 ausgestaltet, der in an sich bekannter, hier nicht im Einzelnen dargestellter Art und Weise, feststehend im zugeordneten Lagerbett eingespannt ist. Das Bauteil mit den Haltesäulen 16 ist als Verstellbügel 19 ausgestaltet, der mit einem weiter unten ab Figur 3 näher beschriebenen Haltemechanismus im zugeordneten Lagerbett gehalten ist. Der Haltemechanismus kann über einen an der Aussenseite des Gehäusegrundkörpers 12 zugänglichen Verstellknopf 20 betätigt werden. Das Teilgehäuse 11 dient - wie Figur 1 und 2 leicht erkennen lässt - als Griffteil der Universalsäge, an dem der mit der Handwerkzeugmaschine arbeitende Handwerker die Universalsäge hält und führt. Gleichzeitig nimmt das Teilgehäuse 11 einen elektrischen Antriebsmotor für die Universalsäge auf, dessen Stromzuleitungskabel 27 am freien Ende des im wesentlichen zylindrischen Teilgehäuses 11 sitzt.

Wie bereits erwähnt, sind die Gehäuseteile 11,12 um die Knickachse 13 winkelverstellbar, müssen zur sicheren Funktion aber miteinander verrastet sein. Dies geschieht mit einer hier nicht näher beschriebenen Winkelarretierung, die über einen an der Aussenseite des Teilgehäuses 11 angebrachten Bedienknopf, der hier als entlang einer Mantellinie des zylindrischen Teilgehäuses 11 bewegbarer Schieber 26 ausgestaltet ist, bedienbar ist Der Schieber 26 lässt sich gegen die Kraft einer hier nicht dargestellten Feder aus der Arretierstellung bewegen, so dass die Gehäuseteile 11 sich winkelverstellen lassen.

Auf der in Figur 1 und 2 nicht erkennbaren Seite des Teilgehäuses 11 befindet sich ein Netzschalter für die Stromzuleitung zum Antriebsmotor.

Figur 3 und Figur 4 zeigen in vergrösserter Darstellung Schnittansichten durch den Gehäusegrundkörper 12 der Universalsäge. Dabei ist Figur 3 eine Darstellung entlang der durch die Mittelebene des Sägeblatts 15 in Figur 2 verlaufenden Schnittebene, während die Schnittebene gemäss Figur 4 längs A - A in Figur 3 liegt.

Der Gehäusegrundkörper 12 hat eine äussere Gehäuseschale 30, die etwa in an sich bekannter Art und Weise aus einem zur Herstellung von Gehäusen von Elektrowerkzeugen geeigneten Kunststoff hergestellt ist An der Innenwandung 31 der Gehäuseschale 30 sind die einander diametral gegenüberliegenden zwei wannenartigen Lagerbetten 32 ausgebildet, in denen je eines der genannten U-förmig geformten Bauteile - Haltebügel 18 und Verstellbügel 19 - in Richtung der hin- und hergehenden Arbeitsbewegung des Sägeblatts 14 oder 15 eingeschoben ist.

In der Mitte zwischen dem Verstellbügel 19 und dem Haltebügel 18 liegt das Sägeblatt 15, dessen Einsteckende in dem erwähnten Spannsystem gehalten ist. Zum Antrieb ist das Spannsystem mit einem etwa als Pleuelgetriebe ausgestalteten, hier nicht dargestellten, Bewegungswandler gekoppelt, der die Drehbewegung des Antriebsmotors in die hin- und hergehende Arbeitsbewegung des Sägeblatts 14, 15 wandelt. Wie Figur 3 noch erkennen lässt, ist das Spannsystem in an sich bekannten Führungsschienen im Innenraum der Gehäuseschale 30 des Gehäusegrundkörpers 12 geführt.

Die Bauteile Haltebügel 18 und Verstellbügel 19 sind zum besseren Verständnis in den Figuren 5 und 6 in perspektivischer Darstellung als Einzelheit abgebildet

Jedes der beiden Bauteile 18, 19 hat eine ebene Basisplatte 33, 34, die beidseitig U-förmig hochgekantete Schenkel 35, 36 aufweist.

Die Schenkel 35 bzw. 36 gehen am-im eingebauten Zustand (Figur 3) - unteren freien Ende der Basisplatten 33 bzw. 34 in die Haltesäulen 16 bzw. 17 über. Dabei sind die freien Enden der Haltesäulen 16 von der Schwenkachse 25 und entsprechend die freien Enden der Haltesäulen 17 von der Schwenkachse 24 durchstochen, wobei die Durchstichspunkte die Drehpunkte bilden, in denen die Fussplatte 21 an ihren seitlich hochgebogenen Bördeln 37 schwenkbar befestigt ist. Entsprechend besteht in der Schwenkachse 25 ebenfalls eine eine Schwenkbewegung erlaubende Befestigung der Fussplatte 21 an den Haltesäulen 16.

Die Figuren 3 und 4 zeigen den eingebauten Zustand letztlich der Fussplatte 21.

Während der Haltebügel 18 - wie bereits erwähnt - in seinem zugeordneten Lagerbett 32' (Figur 3) feststehend eingespannt ist, ist der Verstellbügel 19 über einen nachfolgend beschriebenen Haltemechanismus in seinem zugeordneten Lagerbett 32 gehalten.

Der Haltemechanismus besteht aus zwei sich rechtwinklig kreuzenden Schlitzen 38, 39 (Figur 6) in der Basisplatte 34 des Verstellbügels 19. Dabei verläuft der längere Schlitz 38 parallel zur Verschiebungsrichtung des Verstellbügels 19 im eingebauten Zustand im Innenraum der Gehäuseschalen 30 mittig in dessen Basisplatte 34. Der kürzere Schlitz 39 kreuzt den Schlitz 38 auf der Mitte seiner Längserstreckung rechtwinklig. Beide Schlitze 38, 39 haben jeweils die gleiche Breite.

Im eingebauten Zustand (Figur 3, 4) greift ein in Figur 7 als Einzelheit dargestelltes Führungsteil 40 mit seinem Rastvorsprung 41 kulissensteinartig je nach seiner Winkelstellung in einen der Schlitze 38, 39. Dabei hat das Führungsteil 40 die Form einer ebenen kreisrunden Scheibe 42, auf der sich mittensymmetrisch der Rastvorsprung 41 erhebt. Im Grundriss entspricht die Form des Rastvorsprungs 41 bis auf ein geringes Bewegungsspiel in Breite und Länge der Form des kürzeren Schlitzes 39.

Das Führungsteil 40 sitzt fest auf dem inneren Ende einer in einer Bohrung 43 der Gehäuseschale 30 des Gehäusegrundkörpers 12 geführten Welle 44. Dazu ist das innere Ende der Welle 44 in einer mittig im Führungsteil 40 eingebrachten Befestigungsbohrung 45 auf hier nicht näher beschriebene, aber an sich bekannte Art und Weise - etwa durch Einpressen - drehfest verbunden.

Wie besonders gut in Figur 4 zu erkennen ist, liegt auf der ebenen Aussenseite der Basisplatte 34 zwischen dieser und dem zugeordneten Grund des Lagerbetts 32 ein rechteckiges ebenes Gleitblech 46, dessen Längs- und Quererstreckung den Längen des langen 38 bzw. kurzen Schlitzes 39 entspricht. Das Gleitblech 46 weist mittig eine Durchgangsbohrung 47 auf. Die Durchgangsbohrung 47 hat einen kleineren Durchmesser als die Bohrung 43 in der Wandung der Gehäuseschale 30. Durch die Durchgangsbohrung 47 erstreckt sich die Welle 44.

Auf der der Basisplatte 34 abgewandten Seite des Gleitblechs 46 sitzt eine Druckfeder 48 auf, die konzentrisch auf der Welle 44 angeordnet ist und sich durch die Bohrung 43 in der Wandung der Gehäuseschale 30 erstreckt. Mit ihrem anderen Ende stützt sich die Druckfeder 48 an der Innenfläche des am äusseren, aus der Gehäuseschale 30 des Gehäusegrundkörpers 12 ragenden Ende der Welle 44 angeformten Verstellknopfes 20 ab.

Die Druckfeder 48 hält den Rastvorsprung 41 am Führungsteil 40 in jeder Arbeitsstellung der Universalsäge entsprechend der Winkelposition des Führungsteils 40 entweder mit dem kurzen Schlitz 39 oder mit dem langen Schlitz 38 in kulissensteinartigem Eingriff. Durch manuellen Druck auf den Verstellknopf 20 kommt der Rastvorsprung 41 gegen die Kraft der Druckfeder 48 ausser Eingriff mit demjeweiligen Schlitz 38 oder 39. Durch eine einfache 90°-Drehung am Verstellknopf 20 lässt sich der Rastvorsprung 41 aus einer Eingriffsstellung mit dem einen Schlitz in die andere mögliche Eingriffsstellung mit dem anderen Schlitz bringen.

Dabei befindet sich der Rastvorsprung 41 in einer ersten definierten Arbeitsstellung in formschlüssigem Eingriff mit dem quer zur Arbeitsbewegung des Sägeblatts 14, 15 verlaufenden Schlitz 39, wodurch auch der Verstellbügel 19 starr mit dem Gehäuse, hier also mit dem Gehäusegrundkörper 12 der Universalsäge verrastet ist. In dieser definierten Arbeitsstellung steht die Richtung der Arbeitsbewegung des Sägeblatts 14, 15 genau senkrecht auf der Ebene der Fussplatte 21. Die Universalsäge ist also in dieser Arbeitsstellung als Stichsäge einsetzbar (Figur 1).

In jeder anderen Arbeitsstellung ausserhalb dieser ersten definierten Arbeitsstellung befindet sich der Rastvorsprung 41 im Eingriff mit dem parallel zur Arbeitsbewegung des Sägeblatts 14, 15 verlaufenden Schlitz 38. Da dessen Länge aber wesentlich grösser ist als die Länge des Rastvorsprungs 41, lässt sich der Verstellbügel 19, der letztlich von der Druckfeder 48 gegen das Gleitblech 46 gehalten wird, gegen den Reibschluss zwischen Basisplatte 34 des Verstellbügels 19 und Gleitblech 46 verschieben.

Dabei ist das Gleitblech 46 seinerseits durch die in der Bohrung 43 der Gehäuseschale 30 geführte Welle 44, welche wiederum durch die Durchgangsbohrung 47 im Gleitblech 46 verläuft, ortsfest gehalten. Die Grösse des Reibschlusses ist von der Spannung der Druckfeder 48 bestimmt.

Durch die hier beschriebene, von der Länge des Schlitzes 38 begrenzte Bewegungsmöglichkeit des Verstellbügels 19 ist der Abstand der Schwenkachse 24 vom Gehäuse der Universalsäge, also genauer gesagt, vom Gehäusegrundkörper 12 variabel veränderbar. Da der analoge Abstand der Schwenkachse 25 unveränderbar fest ist, kann sich eine entsprechende variable Veränderung der Winkellage der Ebene der Fussplatte 21 gegenüber der Arbeitsbewegung des Sägeblatts 14, 15 einstellen. Jetzt ist die Universalsäge als Säbelsäge einsetzbar (Figur 2).

In diesem Zusammenhang ist noch zu erwähnen, dass beim Einsatz als Säbelsäge es dabei zweckmässig ist, das Sägeblatt 15 so einzuspannen, dass die Schwenkachse 25 vor der die Sägeverzahnung tragenden Seite des Sägeblatts 15 und die Schwenkachse 24 vor dem Rücken des Sägeblatts 15 zu liegen kommt, wie es Figur 2 und 3 erkennen lässt.

Die oben beschriebene erfindungsgemäss ausgebildete Fussplatte 21 samt ihrer Halterung am Gehäuse der Universalsäge lässt sich praktisch mit jeder Gehäuseausbildung der Universalsäge verwirklichen. Ganz besondere Vorteile ergeben sich aber dann, wenn auch noch - wie beim hier beschriebenen Ausführungsbeispiel - das Gehäuse der Universalsäge durch seine zweiteilige Ausführung sich in ganz besonderem Masse dem Einsatzzweck entweder als Stichsäge oder als Säbelsäge anpassen lässt.

## Patentansprüche

1. Als Stich- oder Säbelsäge einsetzbare Universalsäge mit einem Gehäuse, in dem ein einen elektrischen Antriebsmotor und einen Bewegungswandler enthaltender Antriebsstrang angeordnet ist, der die Drehbewegung des Antriebsmotors in eine hin- und hergehende Arbeitsbewegung des beweglich im Gehäuse geführten Sägeblatts wandelt, und einer Fußplatte zur Abstützung der Universalsäge auf dem zu bearbeitenden Werkstück, wobei die Fußplatte (21) einerseits in einer definierten ersten Arbeitsstellung starr am Gehäuse der Universalsäge (10) verrastbar ist, in der die Richtung der Arbeitsbewegung des Sägeblatts (14, 15) senkrecht auf der Ebene der Fußplatte (21) steht, und die Fußplatte (21) andererseits außerhalb dieser Arbeitsstellung in ihrer Winkellage variabel zur Richtung der Arbeitsbewegung einstellbar ist,
**dadurch gekennzeichnet, dass** die Fußplatte (21) um zwei parallele Schwenkachsen (24, 25) am Gehäuse (12) angelenkt ist und der parallel zur Arbeitsbewegung des Sägeblatts (14, 15) gemessene Abstand einer der Schwenkachsen (25) vom Gehäuse (12) konstant ist, während der Abstand der anderen Schwenkachse (24) variabel einstellbar, jedoch in der definierten ersten Arbeitsstellung, in der beide Abstände gleich sind, verrastbar ist, derart, dass beim Einsatz als Säbelsäge die erste Schwenkachse (25) mit festem Abstand vom Gehäuse (12) vor der die Sägeverzahnung tragenden Seite des Sägeblatts (15) und die andere Schwenkachse (24) mit variablem Abstand vom Gehäuse (12) vor dem Rücken des Sägeblatts (15) liegt, so dass die Fußplatte (21) schwenkbar am Gehäuse (12) angeordnet ist.

2. Universalsäge nach Anspruch 1,
**dadurch gekennzeichnet, dass** die Schwenkachsen (24, 25) gleichen Abstand von der Ebene der Fußplatte (21) haben.

3. Universalsäge nach Anspruch 1 oder 2,
**dadurch gekennzeichnet, dass** die Schwenkachsen (24, 25) der Fußplatte (21) in am Gehäuse (12) gehaltenen Haltesäulen (16, 17) gelagert sind.

4. Universalsäge nach Anspruch 3,
**dadurch gekennzeichnet, dass** jeweils zwei der eine gemeinsame Schwenkachse (24, 25) tragenden Haltesäulen (16,17) als gabelartige Fortsätze eines, insbesondere U-förmig mit ebener Basisplatte ausgebildeten, Bauteils (33, 34) ausgestaltet sind, wobei jedes dieser Bauteile (33, 34) in einem zugeordneten, formangepassten, vorzugsweise wannenartigen, Lagerbett (32, 32') im Gehäuse (12) der Universalsäge geführt ist.

5. Universalsäge nach Anspruch 4,
**dadurch gekennzeichnet, dass** das Bauteil mit den die erste Schwenkachse (25) tragenden Haltesäulen (16) als U-förmiger Haltebügel (18) ausgestaltet ist, der im zugeordneten Lagerbett (32') des Gehäuses (12) der Universalsäge feststehend eingespannt ist, und das Bauteil mit den die andere Schwenkachse (24) tragenden Haltesäulen (17) als U-förmiger Verstellbügel (19) ausgestaltet ist, der über einen Haltemechanismus in der ersten definierten Arbeitsstellung, insbesondere durch Formschluss, im Gehäuse (12) der Universalsäge feststehend arretiert ist, während der Verstellbügel (19) in allen anderen Arbeitsstellungen außerhalb der ersten Arbeitsstellung verschiebbar im zugeordneten Lagerbett (32) geführt, vorzugsweise durch Reibschluss, gehalten ist.

6. Universalsäge nach Anspruch 5,
**dadurch gekennzeichnet, dass** der Haltemechanismus am Verstellbügel (19), vorzugsweise mittig in dessen ebener Basisplatte (34), zwei sich kreuzende Schlitze (38, 39) gleicher Breite enthält, von denen der längere (38) parallel zur Verschiebungsrichtung des Verstellbügels (19) und der kürzere (39) rechtwinklig dazu verläuft, wobei ein im Gehäuse (12) der Universalsäge drehbar gelagertes, von außen betätigbares Führungsteil (40) federkraftbelastet kulissensteinartig in einen der Schlitze (38, 39) eingreift.

7. Universalsäge nach Anspruch 6,
**dadurch gekennzeichnet, dass** das Führungsteil (40) aus einer, vorzugsweise kreisförmigen, ebenen Scheibe (42) besteht, die fest auf dem inneren Ende einer in einer Bohrung (43) in der Wandung (31) des Gehäuses (12) der Universalsäge gelagerten, durch die Schlitze (38, 39) geführten Welle (44) sitzt, und auf der sich symmetrisch und in Richtung der Welle (44) ein Rastvorsprung (41) befindet, dessen Grundrissform in Breite und Länge der Form des kürzeren Schlitzes (39) entspricht.

8. Universalsäge nach Anspruch 7,
**dadurch gekennzeichnet, dass** auf der Basisplatte (34) des Verstellbügels (19) ein an dessen Außenfläche und der des zugeordneten Lagerbetts (32) im Gehäuse (30) der Universalsäge in der Form angepasstes, insbesondere ebenes, Gleitblech (46) aufliegt, das mittig eine Durchgangsbohrung (47) für die Welle (44) aufweist, und dass auf dem Gleitblech (46) eine Druckfeder (48) aufliegt, deren anderes Ende sich an einem am äußeren, aus dem Gehäuse (12) ragenden Ende der Welle (44) ausgebildeten Verstellknopf (20) abstützt und so in den Betriebsstellungen den Rastvorsprung (41) mit einem der Schlitze (38, 39) in Eingriff hält.

9. Universalsäge nach Anspruch 8,
**dadurch gekennzeichnet, dass** das Gleitblech (46) rechteckig ausgebildet ist und mindestens in Längs- und Quererstreckung den Längen des langen (38) bzw. kurzen Schlitzes (39) entspricht.

10. Universalsäge nach einem der Ansprüche 1 bis 9,
**dadurch gekennzeichnet, dass** das Gehäuse mehrteilig aus einem den Antriebsmotor aufnehmenden Teilgehäuse (11), welches gleichzeitig als Griffteil der Universalsäge dient, und einem Gehäusehauptteil (12) besteht, in dem das Sägeblatt (14, 15) geführt ist, wobei die Gehäuseteile (11, 12) um eine zur Achse des Antriebsmotors rechtwinklige Knickachse (13) in verschiedenen Winkelstellungen zueinander verrastbar sind, wobei sich im Antriebsstrang ein Winkelgetriebe befindet.

11. Universalsäge nach Anspruch 10,
**dadurch gekennzeichnet, dass** die Knickachse (13), die Abtriebsachse des Winkelgetriebes und die Achse des Eingangsglieds des Bewegungswandlers in einer Achse zusammen fallen.

## Claims

1. Universal saw which can be used as a jigsaw or sabre saw, comprising a housing in which a drive line is arranged which contains an electric drive motor and a motion converter which converts the rotary motion of the drive motor into a reciprocating working motion of the saw blade movably guided in the housing, and comprising a sole plate for supporting the universal saw on the workpiece to be machined, wherein the sole plate (21), on the one hand, can be latched rigidly on the housing of the universal saw (10) in a defined first working position in which the direction of the working motion of the saw blade (14, 15) is perpendicular to the plane of the sole plate (21) and, on the other hand, the sole plate (21) can be set in its angular position outside this working position in a variable manner to the direction of the working motion, **characterized in that** the sole plate (21) is linked to the housing (12) about two parallel pivot axes (24, 25), and the distance, measured parallel to the working motion of the saw blade (14, 15), of one of the pivot axes (25) from the housing (12) is constant, whereas the distance of the other pivot axis (24) can be set in a variable manner, but can be latched in the defined first working position, in which both distances are the same, in such a way that, during use as a sabre saw, the first pivot axis (25) lies at a fixed distance from the housing (12) in front of that side of the saw blade (15) which has the saw teeth, and the other pivot axis (24) lies at a variable distance from the housing (12) in front of the back of the saw blade (15), such that the sole plate (21) is arranged on the housing (12) in a pivotable manner.

2. Universal saw according to Claim 1, **characterized in that** the pivot axes (24, 25) are at the same distance from the plane of the sole plate (21).

3. Universal saw according to Claim 1 or 2, **characterized in that** the pivot axes (24, 25) of the sole plate (21) are mounted on retaining columns (16, 17) held on the housing (12).

4. Universal saw according to Claim 3, **characterized in that** in each case two of the retaining columns (16, 17) having a common pivot axis (24, 25) are configured as fork-like extensions of a component (33, 34) designed in particular in a U shape with a flat base plate, each of these components (33, 34) being guided in an associated, preferably tub-like support bed (32, 32'), adapted in shape, in the housing (12) of the universal saw.

5. Universal saw according to Claim 4, **characterized in that** the component which has the retaining columns (16) having the first pivot axis (25) is configured as a U-shaped retaining stirrup (18) which is clamped fixedly in the associated support bed (32') of the housing (12) of the universal saw, and the component which has the retaining columns (17) having the other pivot axis (24) is configured as a U-shaped adjusting stirrup (19) which is locked fixedly via a retaining mechanism in the first defined working position, in particular by a form fit, in the housing (12) of the universal saw, whereas the adjusting stirrup (19) is held in all the other working positions outside the first working position in such a way as to be guided in a displaceable manner in the associated support bed (32), preferably by friction grip.

6. Universal saw according to Claim 5, **characterized in that** the retaining mechanism on the adjusting stirrup (19) contains, preferably centrally in its flat base plate (34), two intersecting slots (38, 39) of identical width, of which the longer (39) runs parallel to the displacement direction of the adjusting stirrup (19) and the shorter (39) runs at right angles thereto, a guide part (40) which is rotatably mounted in the housing (12) of the universal saw and can be actuated from outside engaging in one of the slots (38, 39) in a spring-loaded and sliding-block-like manner.

7. Universal saw according to Claim 6, **characterized in that** the guide part (40) consists of a preferably circular, flat disc (42) which sits fixedly on the inner end of a shaft (44), mounted in a hole (43) in the wall (31) of the housing (12) of the universal saw and guided by the slots (38, 39), and on which a latching projection (41) is located symmetrically and in the direction of the shaft (44), the plan form of which latching projection (41) corresponds in width and length to the shape of the shorter slot (39).

8. Universal saw according to Claim 7, **characterized in that** an in particular flat sliding plate (46), adapted in form to the outer surface of the base plate (34) of the adjusting stirrup (19) and to that of the associated support bed (32) in the housing (30) of the universal saw, rests on said base plate (34) and has a central through-hole (47) for the shaft (44), and **in that** a compression spring (48) rests on the sliding plate (46), the other end of which compression spring (48) is supported on an adjusting knob (20) formed on the outer end, projecting from the housing (12), of the shaft (44) and thus holds the latching projection (41) in engagement with one of the slots (38, 39) in the operating positions.

9. Universal saw according to Claim 8, **characterized in that** the sliding plate (46) is of rectangular design and corresponds at least in longitudinal and transverse extent to the lengths of the long slot (38) and the short slot (39).

10. Universal saw according to one of Claims 1 to 9, **characterized in that** the housing is a multi-piece housing consisting of a sectional housing (11), which accommodates the drive motor and at the same time serves as a handle part of the universal saw, and of a housing main part (12) in which the saw blade (14, 15) is guided, it being possible for the housing parts (11, 12) to be latched in various angular positions relative to one another about an articulation axis (13) at right angles to the axis of the drive motor, and angular gearing being located in the drive line.

11. Universal saw according to Claim 10, **characterized in that** the articulation axis (13), the output axis of the angular gearing and the axis of the input member of the motion converter all coincide in one axis.

## Revendications

1. Scie universelle utilisable comme scie sauteuse ou comme scie sabre, comportant un boîtier logeant un moteur électrique et un convertisseur de mouvement formant une ligne de transmission, pour convertir le mouvement de rotation du moteur en un mouvement de travail alternatif de la lame de scie guidée de façon mobile dans le boîtier, ainsi qu'une plaque d'appui pour appuyer la scie universelle sur la pièce à travailler,
la plaque d'appui (21) pouvant se verrouiller dans une première position de travail, définie, rigidement au boîtier de la scie universelle (10), avec la direction du mouvement de travail de la lame de scie (14, 15) perpendiculaire au plan de la plaque d'appui (21) et d'autre part la plaque d'appui (21) peut être réglée en plus de cette position de travail, dans une position angulaire variable par rapport à la direction du mouvement de travail,
**caractérisée en ce que**
la plaque d'appui (21) est articulée autour de deux axes de pivotement (24, 25) parallèles, sur le boîtier (12) et la distance mesurée parallèlement au mouvement de travail de la lame de scie (14, 15) de l'un des axes de pivotement (25) par rapport au boîtier (12) est une distance constante alors que la distance de l'autre axe de pivotement (24) est réglable de façon variable mais dans la première position de travail, définie, dans laquelle les deux distances sont les mêmes, elle peut s'accrocher de façon qu'en utilisation comme scie sabre, le premier axe de pivotement (25) est à distance fixe du boîtier (12) devant le côté de la lame de scie (15) portant les dents et l'autre axe de pivotement (24) est à distance variable du boîtier (12) devant le dos de la lame de scie (15) de façon que la plaque d'appui (21) soit montée pivotante sur le boîtier (12).

2. Scie universelle selon la revendication 1,
**caractérisée en ce que**
les axes de pivotement (24, 25) sont équidistants du plan de la plaque d'appui (21).

3. Scie universelle selon la revendication 1 ou 2,
**caractérisée en ce que**
les axes de pivotement (24, 25) de la plaque d'appui (21) sont montés dans des colonnes de fixation (16, 17) portées par le boîtier (12).

4. Scie universelle selon la revendication 3,
**caractérisée en ce que**
chaque fois deux des colonnes de fixation (16, 17) portant un axe de pivotement commun (24, 25) sont réalisées comme des prolongements en forme de fourche d'une pièce (33, 34), notamment en forme de U avec une plaque de base plane, chacune des pièces (33, 34) est guidée dans une plaque de palier (32, 32') de forme adaptée, notamment en forme de cuvette, dans le boîtier (12) de la scie universelle.

5. Scie universelle selon la revendication 4,
**caractérisée en ce que**
la pièce avec les colonnes de fixation (16) portant le premier axe de pivotement (25) est un étrier de fixation (18) en forme de U serré de manière fixe dans la plaque de palier (32') associée du boîtier (12) de la scie universelle et la pièce avec les colonnes de fixation (17) portant l'autre axe de pivotement (24) est réalisée sous la forme d'un étrier de réglage (19) en forme de U, qui se bloque par un mécanisme de fixation dans la première position de travail définie, notamment par une liaison par la forme dans le boîtier (12) de la scie universelle alors que l'étrier de réglage (19) est guidé dans toutes les autres positions de travail, en dehors de la première position de travail, de manière coulissante dans la plaque de palier (33) associée, de préférence en étant tenu par une liaison par friction.

6. Scie universelle selon la revendication 5,
**caractérisée en ce que**
le mécanisme de fixation de l'étrier de réglage (19) comporte de préférence au milieu de sa plaque de base plane (34), deux fentes (38, 39) qui se croisent et ont la même largeur, la fente la plus longue (38) étant parallèle à la direction de coulissement de l'étrier de réglage (16) et la branche la plus courte (39) étant perpendiculaire à l'autre branche, un coulisseau chargé par ressort monté pivotant dans le boîtier (12) de la scie universelle, et qui peut s'actionner de l'extérieur, pénètre dans l'une des fentes (38, 39).

7. Scie universelle selon la revendication 6,
**caractérisée en ce que**
la pièce de guidage (40) se compose d'un disque plan (42), de préférence de forme circulaire, solidaire de l'extrémité intérieure d'un arbre (44) monté dans un perçage (43) de la paroi (31) du boîtier (12) de la scie universelle en étant guidé par les fentes (38, 39) et qui est symétrique et présente dans la direction de l'arbre (44) une saillie d'enclipsage (41) dont la forme de base correspond à la largeur et à la longueur de la forme de la fente la plus courte (39).

8. Scie universelle selon la revendication 7,
**caractérisée en ce qu'**
une tôle de glissement (46), notamment plane, s'appuie contre la surface extérieure de la plaque de base (34) de l'étrier de réglage (19) et qui est adaptée à la forme de la plaque de palier (32) associée, dans le boîtier (30) de la scie universelle, cette tôle (46) ayant un perçage traversant (47) en son milieu pour l'arbre (44) et un ressort de compression (48) s'appuie contre la tôle de glissement (46), l'autre extrémité du ressort s'appuyant contre un bouton de réglage (20) extérieur, porté par l'extrémité de l'arbre (44) sortant du boîtier (12), pour tenir la saillie d'encliquetage (41) en prise dans l'une des fentes (38, 39) pour les positions de fonctionnement.

9. Scie universelle selon la revendication 8,
**caractérisée en ce que**
la tôle de glissement (46) est rectangulaire et sa longueur et sa largeur correspondent à la longueur de la fente longue (38) et à celle de la fente courte (39).

10. Scie universelle selon l'une des revendications 1 à 9,
**caractérisée en ce que**
le boîtier en plusieurs parties se compose d'une partie de boîtier (11) logeant le moteur, servant en même temps de poignée de la scie universelle et d'une partie principale de boîtier (12) dans laquelle est guidée la lame de scie (14, 15), les parties de boîtier (11, 12) pouvant être accrochées l'une par rapport à l'autre dans différentes positions angulaires autour d'un axe de pliage (13) perpendiculaire à l'axe du moteur, et la ligne de transmission comporte un renvoi d'angle.

11. Scie universelle selon la revendication 10,
**caractérisée en ce que**
l'axe de pliage (13), l'axe de sortie du renvoi d'angle et l'axe de l'organe d'entrée du convertisseur de mouvement coïncident suivant un axe.
